# EUROPÄISCHE PATENTSCHRIFT

(11) **EP 0 285 684 B1**
(45) Veröffentlichungstag und Bekanntmachung des Hinweises auf die Patenterteilung: **10.03.1993**
(21) Anmeldenummer: 87105096.9
(22) Anmeldetag: 07.04.1987
(51) Int. Cl.: G02C 3/00, G02C 5/12, G02C 3/02

(54) **Brillenfassung**
Spectacle frame
Monture de lunettes

(43) Veröffentlichungstag der Anmeldung: 12.10.1988
(73) Patentinhaber: Marwitz & Hauser GmbH, D-70199 Stuttgart (DE)
(72) Erfinder: Juckel, Gerhard, D-7000 Stuttgart 1 (DE)
(74) Vertreter: Fey, Hans-Jürgen

(56) Entgegenhaltungen:
- EP-A- 0 146 934
- DE-A- 2 545 683
- FR-A- 445 332
- FR-A- 2 576 116
- GB-A- 2 102 150
- GB-A- 2 117 919
- US-A- 2 660 092
- US-A- 4 152 051
- US-A- 4 391 498

## Beschreibung

Die Erfindung betrifft eine Brillenfassung mit geschlossenen Rändern um die Brillenlinsen und mit oder ohne Brillenbacken, bei welcher ein weiches Formteil als Nasenauflage angebracht ist.

Die bisher bekannten Brillenfassungen eignen sich sehr gut, wenn man den Kopf nirgendwo gegenlehnt. Brillenfassungen dieser Art gibt es in den vielfältigsten Ausführungen. Probleme bekommt man aber, wenn man diese Brillen liegend verwenden möchte. Bei jeder seitlichen Drehung drückt man sich die Brillenbügel schmerzhaft gegen den Kopf.

Weiche Nasenauflagen an Brillenfassungen mit Brillenbügel sind bekannt, wobei diese auf die Augenränder und gegebenenfalls auf die Fassungsbrücke aufgerastet (US-PS 27 74 279, US-PS 35 84 939, DE-OS 25 45 683, DE-OS 32 12 686, usw.) werden.

Aus der US-PS 4 391 498 ist eine Brillenfassung mit geschlossenen Rändern um die Brillenlinsen bekannt, an welcher über seitlich angebrachte u-förmige Halterungen ein Nylonband angebracht ist. Dieses Nylonband ist in seiner Länge veränderbar. Diese Brillenfassung hat den Nachteil, daß die Längenverstellung des Nylonbandes einen Brillenträger in liegender Position drücken würde und außerdem durch die harte Nasenauflage ein unangenehmes Druckgefühl auf der Nase des Brillenträgers entsteht.

Aus der US-PS 2 660 092 ist eine Brillenfassung bekannt, bei welcher direkt an den beiden Augenrändern ein Band befestigt ist, welches über eine Kugel mit Durchbohrung in der Länge verändert werden kann. Je nachdem, wo sich die Kugel befindet, drückt sie gegen den Kopf des Brillenträgers, wenn sich dieser in einer liegenden Position befindet. Außerdem besitzt diese Brille eine auf die Dauer gesehen unangenehme harte Nasenauflage.

Aus der US-PS 4 152 051 ist eine Brillenfassung mit Stirnband bekannt, wobei die Brillenfassung an der Brücke zwischen den geschlossenen Rändern um die Brillenlinsen an dem Stirnband befestigt ist. Eine derartige Brille ist für einen liegenden Brillenträger ungeeignet, da der Abstand zwischen den Brillenlinsen und den Augen des Trägers bei jeder Liegeposition stark schwanken kann.

Aus der FR-PS 2 576 116 ist eine Brillenfassung bekannt, bei welcher ein Gummiband direkt an den seitlichen Rändern der Brillenfassung befestigt ist. Diese Brille ist durch den dauernden Druck des elastischen Bandes auf den Kopf des Brillenträgers nur kurzzeitig (z.B. bei einer Sportveranstaltung) akzeptabel und nicht für einen im Bett liegenden Brillenträger geeignet.

Alle bisherigen Lösungen berücksichtigen aber nicht einen im Bett liegenden Brillenträger. Aus der Veröffentlichung der Zeitschrift "Eltern", Heft 2/1987, Seite 5 ist eine Brille bekannt, die das Problem für Babys zu lösen versucht. Aber auch hier ist die Nasenbelastung zu hoch und die Befestigung der Brille drückt beim seitlichen Liegen.

Wenn im folgenden der Ausdruck Augenrand verwendet wird, so ist darunter ein geschlossener Rand uni eine Brillenlinse zu verstehen.

Unter Brillenbügel sei im folgenden die gemäß DIN 5361, Seite 9, Ausgabe Oktober 1980 bestimmte technische Benennung "Brillenbacke", "Backe" bzw. "verlängerte Backe" gemeint.

Der Erfindung liegt die Aufgabe zugrunde, eine Brillenfassung zu entwickeln, welche ein angenehmes Tragen im liegenden Zustand sowohl in der Rücken- als auch in den Seitenlagen ermöglicht.

Diese Aufgabe wird erfindungsgemäß durch die im kennzeichnenden Teil des Patentanspruchs 1 angegebenen Merkmale gelöst und ist dadurch gekennzeichnet, daß die Brillenbacken zum Kopf des Trägers hin verlängert sind und sich an den Backen eine in der Länge veränderliche unelastische bandförmige Fassungshalterung mit Klettverschluß befindet. Außerdem wird diese Aufgabe erfindungsgemäß durch die im kennzeichnenden Teil des unabhängigen Patentanspruchs 2 angegebenen Merkmale gelöst und ist dadurch gekennzeichnet, daß eine Kopfhaube als unelastische netzförmige Fassungshalterung ausgebildet und an der Brillenfassung befestigt ist.

Eine weiche Auflage der Brille auf dem Nase kann durch ein weiches, zur Auflage auf dem Nasenwurzelbereich bestimmtes Formteil mit eingelassenem harten Einschiebeteil realisiert werden. Stellt man das Formteil, das aus einem weichen, elastischen Stoff bestehen soll, im Gieß- oder Spritzverfahren her, so kann das Einschiebeteil in der Gußform in das weiche Formteil eingegossen werden. Hierbei ist es vorteilhaft, wenn das Einschiebeteil in zwei Richtungen verlängert ist und Löcher in den Verlängerungen für eine sichere Verankerung des Einschiebeteils in dem Formteil sorgen. Durch Aussparungen für die Fassungsbrücke und die Augenränder im Formteil kann ein rutschsicherer Sitz des Formteils an der Brille gewährleistet werden. Theroplastischer Kunststoff eignet sich dabei sehr gut als Material für das Formteil.

Zum Halten der Brillenfassung am Kopf hat diese Befestigungsösen für die Anbringung einer unelastischen Fassungshalterung. Die Befestigungsösen können sich dabei direkt an den Augenrändern oder an kurzen Brillenbügeln befinden.

Die Verlängerungen der Augenränder zu den Befestigungsösen für die Anbringung der unelastischen Fassungshalterung am Kopf sollten mit einem weichen, elastischen Stoff ummantelt sein. Sind die Befestigungsösen an kurzen Bügeln befestigt, welche durch ein Bügelgelenk beweglich sind, sollte sich die Ummantelung primär um diese Bügelgelenke befinden. Vorteilhafterweise gestaltet man die Ummantelung so, daß der innere Ummantelungsteil länger ist. Dadurch wird erreicht, daß es zu einer automatischen Ausrichtung der Bügel kommt und die Bügel von selbst wieder in ihre ursprüngliche Lage gebracht werden.

Um eine möglichst geringe Druckverteilung bei dem Halten der Brillenfassung am Kopf zu erhalten und trotzdem einen sicheren Sitz zu gewährleisten, sind mehrere Formen der Befestigung vorteilhaft. Indem man an Befestigungsösen ein unelastisches Band mit einem Klettverschluß befestigt, erreicht man einen sicheren Sitz der Brillenfassung am Kopf, ohne daß druckerzeugende Erhebungen durch den Verschluß auftreten. Besonders vorteilhaft ist bei dieser Befestigung die optimale Anpassungsmöglichkeit an jede Kopfform durch die Flexibilität der Längenverstellung des ansonsten unelastischen Bandes. Die Innenfläche des Bandes läßt sich derart gestalten, daß man eine sehr weiche und angenehme Auflagefläche am Kopf erhält. Wichtig ist bei den anzuwendenden Formen der Befestigung, daß eine leichte Reinigung möglich ist (Austauschbarkeit durch Druckknopfbefestigung des Bandes an Ösen, und daß die Befestigung sowohl weich, hautverträglich und rutschfest ist, um einen sicheren Sitz am Kopf zu gewährleisten. Die Befestigung darf so wenig wie möglich stören und zu möglichst geringen lokalen Druckbelastungen am Kopf in jeder Lage und an jedem Ort führen, so daß eine störungsfreie Dauertragbarkeit gewährleistet ist.

Außer dem Band mit Klettverschluß kann man in vorteilhafter Weise eine Kopfhaube zum Halten der Brillenfassung verwenden. Die Haube ist dabei in vorteilhafter Weise als Netz ausgeführt. Damit wird ein Schwitzen unter der Haube vermieden, da zu jeder Zeit Luft an den Kopf gelangen kann. Der Ohrenbereich sollte dabei freigehalten werden. Vorteilhafterweise sollten die Netzmaschen so eng sein, daß ein Säugling nicht in sie hineingreifen kann. Einen besonders sicheren Sitz der Kopfhaube aus einem Netz oder einem dünnen Tuch erhält man, wenn man sie extra durch ein Kinnband sichert, welches längenveränderbar ist. Die Haube sollte in der Weise gestaltet sein, daß sie der Kopfform des Trägers angepaßt werden kann (d.h. in der Größe einstellbar sein).
Eine weiche Ummantelung der Augenränder mindestens auf der dem Gesicht zugewandten Seite mindert die Verletzungsgefahr. Um die Brille möglichst leicht zu gestalten, sollten die Gläser aus Kunststoff sein. Auf jeden Fall muß auf die Bruchsicherheit höchsten Wert gelegt werden.

Brillenfassungen der oben beschriebenen Art eignen sich bevorzugt für die Verwendung bei im Bett liegenden Menschen und Kleinkindern. Dabei kommt es darauf an, daß in der liegenden Körperlage keine Druckstellen durch das Brillengestell entstehen und auch das Liegen in seitlicher Lage als angenehm empfunden wird. Diese Aufgabe wird von der Erfindung im besonderen Maße erstmals erfüllt.

Die Erfindung wird im folgenden in den Zeichnungen 1-5 näher beschrieben, wobei im einzelnen darstellen
- Figur 1a: die Brillengrundfassung mit Befestigungsösen an kurzen Bügeln;
- Figur 1b: die Brillengrundfassung mit Befestigungsösen direkt an den Augenrändern;
- Figur 2a: Detailbetrachtung der kurzen Bügel mit Befestigungsösen;
- Figur 2b: Detailbetrachtung von kurzen, beweglichen Bügeln mit Befestigungsösen;
- Figur 3: die Nasenauflage;
- Figur 4: die Brillenfassung mit Befestigungsösen an kurzen Bügeln und einem Halteband mit Klettverschluß;
- Figur 5: eine Kopfhaube mit Brillenfassung;
- Figur 6: ein Windsorrand.

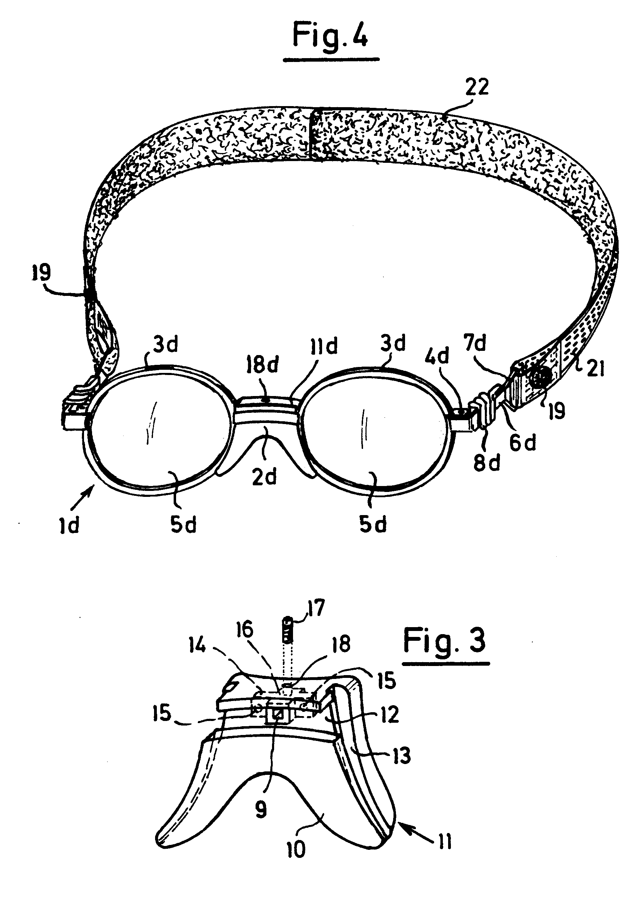

In der Figur la ist eine Brillenfassung (1) mit Befestigungsösen (7) an kurzen Bügeln (6) gezeigt, welche sich besonders gilt für eine Brille mit Halteband eignet. Die beiden Augenränder (3) mit den Brillengläsern (5) sind durch eine Fassungsbrücke (2) fest miteinander verbunden. An der Fassungsbrücke (2) befindet sich ein Haltedorn (20) mit Gewindebohrung für die Befestigung der Nasenauflage (hier nicht gezeigt, Figur 3). An den äußeren Rändern der Augenränder (3) sind die kurzen Bügel (6) mit den Befestigungsösen (7) mit einer Schraubbefestigung (4) befestigt. In dem Bereich zwischen den Augenrändern (3) und den Befestigungsösen (7) befindet sich eine weiche Umhüllung (8) um die kurzen Bügel (6).

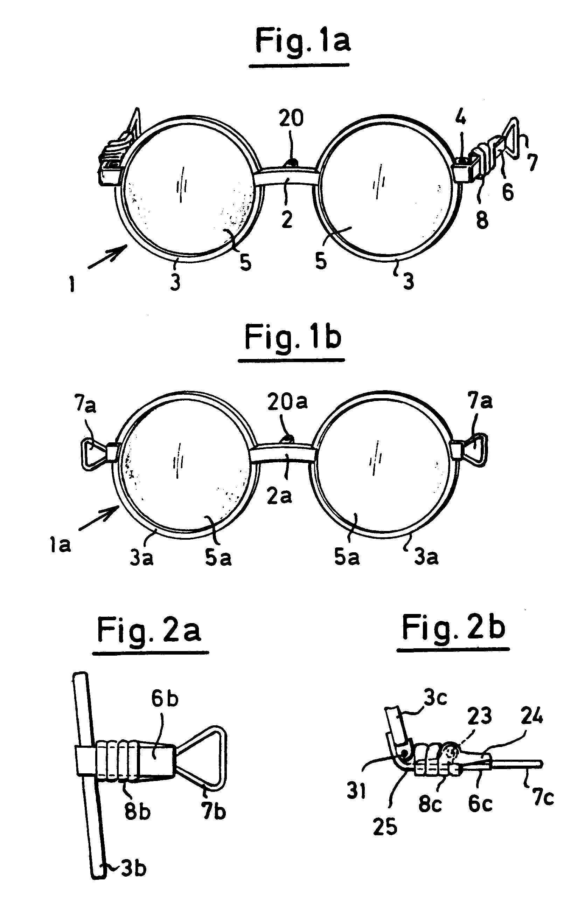

In Figur 1b ist eine Brillenfassung (1a) zu sehen, welche die Befestigungsösen (7a) direkt an den Augenrändern (3a) hat. Das heißt, bei dieser Fassung wurde ganz auf die kurzen Bügel (6) aus Figur 1a verzichtet.

Figur 2a zeigt eine Detailbetrachtung der kurzen Bügel (6b) mit Befestigungsösen (7b). Sehr deutlich ist zu sehen, wie die weiche Umhüllung (8b) den Raum zwischen den Augenrändern (3b) und Befestigungsösen (7b) abdeckt.

In Figur 2b ist eine Detailbetrachtung zu sehen, bei welcher ein kurzer, beweglicher Bügel (6c) mit Befestigungsöse (7c) zu sehen ist. Hierbei ist ein kurzes Verbindungsstück (25) an den Augenrand (3c) über eine Schraubbefestigung (31) angeschraubt, welche als Gegenstück zum kurzen Bügel (6c) mit Befestigungsöse (7c) dient und mit diesem ein Bügelgelenk (23) bildet. Auch hier ist wieder die Umhüllung (8c) allerdings diesmal von oben zu sehen. Sehr deutlich sieht man, daß sie eine Verlängerung (24) an der Bügelinnenseite hat, was dazu führt, daß der kurze Bügel (6c) unbelastet immer eine definierte Lage einnimmt.

In der Figur 3 kann man das auf der Nase aufliegende Formteil (11) im Detail sehen. Es besteht aus einer weichen, elastischen Auflage (10) auf den Nasenwurzelbereich in das ein hartes Einschiebeteil (16) eingegossen ist. Das Formteil (11) hat Aussparungen (13) für die Augenränder (3) und eine Aussparung (12) für die Fassungsbrücke (2). Das Einschiebeteil (16) hat Löcher (15) zu beiden Seiten der Buchsenöffnung (9), in welche bei der Herstellung des Formteiles (11) ein Teil der Mischung fließen kann und so für eine feste Verankerung des Einschiebeteiles (16) sorgt. Diese Löcher (15) befinden sich in den Verlängerungen (14) zu beiden Seiten der Buchsenöffnung (9). Wenn das Formteil (11) an der Brillenfassung (1) befestigt wird, schiebt sich der Haltedorn (20) mit der Gewindebohrung von der Fassungsbrücke (2) in die Buchsenöffnung (9). Mit einer kopflosen Schraube (17) durch die Bohrung (18) im Formteil (11) und dem Einschiebeteil (16) kann man nun den Haltedorn (20) an der Fassungsbrücke (2) fest mit dem Einschiebeteil (16) des Formteiles (11) verschrauben. Das Einschiebeteil (16) zusammen mit dem Gewinde im Haltedorn ermöglicht eine einwandfreie feste Verbindung zwischen dem Formteil (11) und der Fassungsbrücke (2) oder den Augenrändern (3) durch eine Schraubverbindung. Zur Herstellung des Formteiles (11) eignet sich besonders thermoplastischer Kunststoff, während man das Einschiebeteil (16) in vorteilhafter Weise aus Hartplastik fertigt.

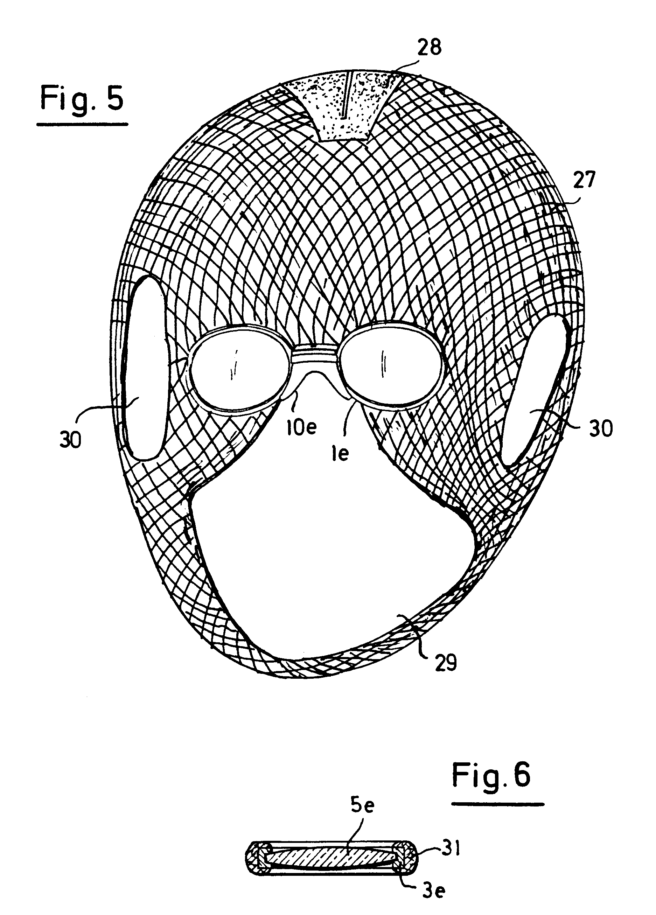

In der Figur 4 ist eine Brillenfassung (1d) mit Befestigungsösen (7d) an kurzen Bügeln (6d) und einem Halteband (21) mit Klettverschluß (22) zu sehen. Die Bügel (6d) sind mit einer Schraubbefestigung (4d) an den Augenrändern (3d) befestigt. Zwischen dieser Schraubbefestigung (4d) und den Befestigungsösen (7d) sind die kurzen Bügel (6d) von einer weichen Umhüllung (8d) umgeben. Das weiche Formteil (11d) ist mit der Fassungsbrücke (2d) fest verschraubt. An den Befestigungsösen (7d) ist das Halteband (21) mit Druckknöpfen (19) befestigt, damit das Halteband (21) leicht entfernt werden kann. Um die Augenränder (3d) herum kann sich ein sog. Windsorrand befinden (siehe Figur 6).

In Figur 5 ist das breite Band des Haltebandes (21) aus Figur 4 zu einer Kopfhaube (27) vergrößert worden, wobei die Haube (27) aus einem Netz besteht, so daß es zu keinem Hitzestau kommt, da die Luft die Haut an jeder Stelle problemlos erreichen kann. An dieser Kopfhaube (27) ist die Brillenfassung (1e) mit dem weichen Formteil (10e) an kleinen Ösen (hier nicht eingezeichnet; alternative Befestigungen müssen einen festen Halt gewährleisten) befestigt. Die Kopfhaube (27) wird mit einem Klettverschluß (28) am Hinterkopf so verschlossen, daß ein fester Sitz jederzeit gewährleistet ist. Gleichzeitig ermöglicht der Klettverschluß (28), daß die Größe der Haube (27) der Größe des Kopfes des jeweiligen Trägers in einem relativ weiten Bereich mühelos angepaßt werden kann. Wichtig bei der Verwendung der Kopfhaube (27) als eine Halterung für eine Brillenfassung (1e) für Kleinstkinder ist, daß die Haube (27) auf dem Kopf kaum spürbar ist, das Kind die Haube (27) nicht vom Kopf reißen kann (hier ist insbesondere die Maschengröße zu beachten) und sich das Kind bei dem Versuch die Haube (27) auszuziehen nicht verletzen kann. In der Kopfhaube (27) sind Öffnungen im Nase-Mund-Bereich (29) und im Bereich der Ohren (30) vorhanden.

In Figur 6 ist der sog. Windsorrand (31) zu sehen. Er umschließt die Augenränder (3e), in welchen sich die Brillengläser (5e) befinden. Der Rand kann aus einer Zellulose-Acetatbasis aufgebaut sein, wenn die Augenränder aus Metall bestehen, und hat eine zusätzliche Schutzfunktion für das Gesicht, gleichzeitig führt er zu einem bequemen Sitz der Brillenfassung. Ein Rand aus einem weichen Material, z.B. Silikongummi, kann diese zusätzliche Schutzwirkung noch verstärken.

## Patentansprüche

1. Brillenfassung (1, 1a, 1d) mit geschlossenen Rändern (3, 3a-3d) um die Brillenlinsen (5, 5a, 5d) und Brillenbacken (6, 6b, 6c, 6d), bei welcher ein weiches Formteil (11, 11d) als Nasenauflage angebracht ist dadurch gekennzeichnet, daß die Brillenbacken (6, 6b, 6c, 6d) zum Kopf des Trägers hin verlängert sind und sich an den Backen (6, 6b, 6c, 6d) eine in der Länge veränderliche unelastische bandförmige Fassungshalterung (21) mit Klettverschluß (22) befindet.

2. Brillenfassung (1e) mit geschlossenen Rändern (3e) um die Brillenlinsen (5e), bei welcher ein weiches Formteil (10e) als Nasenauflage angebracht ist dadurch gekennzeichnet, daß eine Kopfhaube (27) als unelastische, netzförmige Fassungshalterung ausgebildet und an der Brillenfassung (1e) befestigt ist.

3. Brillenfassung nach einem der Ansprüche 1 oder 2, dadurch gekennzeichnet, daß die Ränder (3, 3a-e) um die Brillenlinsen (5, 5a, 5b, 5e) mit einer Ummantelung (8, 8b, 8c, 8d, 31) versehen sind.

4. Brillenfassung nach einem der Ansprüche 1 oder 2, dadurch gekennzeichnet, daß die Ränder (3, 3a-e) um die Brillenlinsen (5, 5e) aus Metall bestehen und zumindest an der dem Gesicht zugewandten Seite mit einer weichen Ummantelung (8, 8b, 8d) versehen sind.

5. Brillenfassung nach einem der Ansprüche 1 oder 2, dadurch gekennzeichnet, daß ein weiches, elastisches, zur Auflage auf den Nasenwurzelbereich bestimmtes Formteil (11, 11d; 10e) mit eingelassenem harten Einschiebeteil (16) auf eine Fassungsbrücke (2, 2a, 2d) vorhanden ist.

6. Brillenfassung nach Anspruch 1, dadurch gekennzeichnet, daß die verlängerten Brillenbacken (6, 6b, 6c, 6d) Befestigungsösen (7, 7a-7d) aufweisen und von einer weichen Umhüllung derart umschlossen sind, daß eine ebene, gerippte Umhüllung von den geschlossenen Rändern bis zu den Befestigungsösen (7, 7a-7d) vorliegt.

7. Brillenfassung nach Anspruch 4 und Anspruch 1, dadurch gekennzeichnet, daß die verlängerten Backen (6c) Scharniere (23) aufweisen, die von einer weichen Umhüllung (8c) derart umschlossen sind, daß die Umhüllung (8, 8b, 8c, 8d) die Scharniere (23) im Ruhezustand in eine definierte Endlage drückt.

8. Brillenfassung nach Anspruch 2, dadurch gekennzeichnet, daß die Kopfhaube (27) in ihrer Größe dem jeweiligen Kopf des Trägers angepaßt werden kann.

9. Brillenfassung nach Anspruch 2, dadurch gekennzeichnet, daß die Kopfhaube (27) aus einem Netz mit einer so kleinen Maschenweite besteht, daß ein Kleinkind nicht mit seinen Fingern in die Maschen greifen kann.

## Claims

1. Spectacle frame (1, 1a, 1d) with closed lens holders (3, 3a-3d) around the spectacle lenses (5, 5a, 5d) and short temples (6, 6b, 6c, 6d) at which a soft means (11, 11d) is fixed as a nose support characterised in that the short spectacle temples (6, 6b, 6c, 6d) are enlarged in the direction of the wearers head and that at this short temples (6, 6b, 6c, 6d) a non-elastic band (21) is connected, which is adjustable in the lenght and having a Valcro closure (22).

2. Spectacle frame (1e) with closed lens holders (3e) around the spectacle lenses (5e) at which a soft means (10e) is fixed as a nose support characterised in that a head hood (27) for the wearers head is made of non-elastic net-like material and fixed at the spectacle frame (1e).

3. Spectacle frame according claim 1 or 2 characterised in that said holders (3, 3a-e) around said spectacle lenses (5, 5a, 5b, 5e) having a casing (8, 8b, 8c, 8d, 31).

4. Spectacle frame according claim 1 or 2 characterised in that said holders (3, 3a-e) around said spectacle lenses (5, 5e) being made of metal and having a side facing toward the wearer enclosed at least by soft casings (8, 8b,8d), respectively.

5. Spectacle frame according claim 1 or 2 characterised in that a soft elastic support (11, 11d, 10e) defining a bearing surface for being in bearing contact engagement with the nose root of the nose of the wearer and including a hard insert piece (16) embedded in said support is connected with a bridge (2, 2a, 2d) interconnecting said lens holders.

6. Spectacle frame according claim 1 characterised in that the short temples (6, 6b, 6c, 6d) having attachement loops (7, 7a-7d) and are enclosed by coverings , so that a flat, structured covering exist staring at the closed lens holders until the attachement loops (7,7a-7d).

7. Spectacle frame according claim 1 or 4 characterised in that the short temples (6c) are connected with two hinges (23) to said lens holders and that this hinges (23) are surrounded by coverings (8c) in that way, that the coverings (8, 8b, 8c, 8d) bias the short temple (6c) corresponding thereto into its end position.

8. Spectacle frame according claim 2 characterised in that said head hood (27) is adjustible in size according to the size of the wearers head.

9. Spectacle frame according claim 2 characterised in that the net-like head hood (27) having loops selected to have a size sufficiently small so that an infant cannot penetrate the hood with the finger.

## Revendications

1. Monture de lunettes (1, 1a, 1d) comportant des cercles fermés (3, 3a-3d) autour des verres (5, 5a, 5b) et des parties latérales (6, 6b, 6c, 6d), sur laquelle une pièce moulée souple (11, 11d) est disposée pour l'appui sur le nez, caractérisée en ce que les parties latérales (6, 6b, 6c, 6d) sont prolongées en direction de la tête du porteur et sont pourvues d'un dispositif de maintien ou support de monture (21) inélastique en forme de bande dont la longueur est variable et qui possède une fermeture Velcro (2).

2. Monture de lunettes (1e) comportant des cercles fermés (3e) autour des verres (5e) et sur laquelle est disposée une pièce moulée souple (10e) pour l'appui sur le nez, caractérisée en ce qu'un couvre-chef (27) est réalisé comme un dispositif de maintien ou support de monture inélastique en forme de filet et est fixé à la monture (1e).

3. Monture de lunettes selon la revendication 1 ou 2, caractérisée en ce que les cercles (3, 3a-e) autour des verres (5, 5a, 5b, 5e) sont pourvus d'un revêtement (8, 8b, 8c, 8d, 31).

4. Monture de lunettes selon la revendication 1 ou 2, caractérisée en ce que les cercles (3, 3a-e) autour des verres (5, 5e) sont en métal et sont pourvus, tout au moins du côté dirigé vers le visage, d'un revêtement souple (8, 8b, 8d).

5. Monture de lunettes selon la revendication 1 ou 2, caractérisée en ce qu'elle comprend une pièce moulée souple et élastique (11, 11d; 10e) destinée à l'appui sur la région de la racine du nez et contenant un élément d'insertion (16) dur encastré, pièce qui est prévue sur un pont (2, 2a, 2d) de la monture.

6. Monture de lunettes selon la revendication 1, caractérisée en ce que les parties latérales prolongées (6, 6b, 6c, 6d) présentent des oeillets de fixation (7, 7a-7d) et sont entourées d'un gainage souple, de manière qu'un gainage plan nervuré s'étende depuis les cercles fermés jusqu'au oeillets de fixation (7, 7a-7d).

7. Monture de lunettes selon les revendications 1 et 4, caractérisée en ce que les parties latérales prolongées (6c) présentent des charnières (23) qui sont entourées d'un gainage souple (8c), de manière que le gainage (8, 8b, 8c, 8d) pousse les charnières (23) à l'état de repos à une position extrême définie.

8. Monture de lunettes selon la revendication 2, caractérisée en ce que la grandeur du couvre-chef (27) est adaptable à la tête du porteur.

9. Monture de lunettes selon la revendication 2, caractérisée en ce que le couvre-chef (27) est réalisé d'un filet dont l'ouverture de maille est si petite qu'un petit enfant ne peut pas entrer ses doigts dans les mailles.
